# DEMANDE DE BREVET EUROPEEN

(11) **EP 0 889 280 A1**
(43) Date de publication de la demande: **07.01.1999**
(21) Numéro de dépôt: 98401613.9
(22) Date de dépôt: 29.06.1998
(51) Int. Cl.: F21M 3/20, B60Q 1/076

(54) **Projecteur de véhicule automobile capable d'émettre, avec une source lumineuse unique, deux faisceaux différents**

(30) Priorité: 30.06.1997 FR 9708192; 11.09.1997 FR 9711326; 02.03.1998 FR 9802476
(71) Demandeur: VALEO VISION, 93000 Bobigny (FR)
(72) Inventeur: De Lamberterie, Antoine, 75019 Paris (FR); Lelevé, Joel, 93800 Epinay-sur-Seine (FR); Prévost, André, 91540 Mennecy (FR)
(74) Mandataire: Le Forestier, Eric

(57) **Abrégé**

Le projecteur de véhicule automobile comprend une source lumineuse et un miroir (30) déplaçables l'un par rapport à l'autre pour engendrer deux faisceaux lumineux de types différents, la source lumineuse étant montée fixe sur une partie (50) du projecteur par rapport à laquelle le miroir (30) peut être déplacé pour occuper sélectivement l'une parmi deux positions discrètes, le déplacement du miroir (30) par rapport à la source consistant en un basculement autour d'un axe (A). L'axe est éloigné de la source.

## Description

La présente invention a trait d'une façon générale les projecteurs de véhicules automobiles, et concerne en particulier un projecteur capable, avec une lampe unique et un réflecteur unique, d'engendrer deux faisceaux lumineux différents.

On connaît déjà dans la technique un certain nombre de projecteurs de ce type.

Tout d'abord, le document DE-A-44 19 365 décrit un projecteur dont le miroir possède une partie mobile, la lampe étant fixe, et le déplacement de cette partie mobile permet de modifier la répartition photométrique du faisceau, et donc d'engendrer deux faisceaux différents.

Cette solution connue est toutefois désavantageuse en ce que les deux positions de la partie mobile par rapport à la partie fixe doivent être assurées avec une précision extrême pour obtenir des faisceaux de bonne qualité, ce qui s'avère difficile à obtenir dans des projecteurs de grande série dont on cherche à maintenir le coût de revient à un niveau raisonnable.

On connaît également par le document EP-A-0 705 730 un projecteur dans lequel le miroir est fixe, tandis que la lampe peut être déplacée ou commutée entre deux positions, ce qui permet de produire deux faisceaux différents.

Dans le même esprit, on connaît par FR-A-2 239 862 un projecteur dans lequel on réalise une translation combinée de la lampe, verticalement et horizontalement, par rapport à un réflecteur fixe, conjointement avec un basculement d'un occulteur associé à la lampe, pour engendrer sélectivement un faisceau de croisement ou un faisceau de route.

On a toutefois observé que la commutation mécanique d'une lampe entre deux positions posait des problèmes pratiques difficiles à résoudre.

Ainsi, dans le cas d'une lampe halogène à filament, les chocs subis par la lampe à chaque déplacement, et en particulier à chaque arrivée en fin de course, diminuent sensiblement sa durée de vie. Cette durée de vie est également diminuée par les vibrations auxquelles la lampe est exposée. En effet, la rapidité de déplacement requise notamment pour passer dans les temps imposés par les règlements entre la fonction croisement et la fonction route implique que la lampe soit montée sur un équipage mobile aussi léger que possible, avec en conséquence une quasi-impossibilité de filtrer ces vibrations.

Pour ce qui concerne les lampes à décharge gazeuse, leur durée de vie est normalement moins affectée par les chocs et vibrations que dans le cas d'une lampe à filament. Toutefois, ces chocs et vibrations provoquent des tressautements de l'arc lumineux, ainsi que des changements de couleur de la lumière émise, dûs à une évaporation excessive des sels qui, en l'absence de vibrations, sont normalement condensés. Il en résulte la présence nettement perceptible, dans le faisceau projeté sur la route, d'un phénomène de scintillement qui affecte la qualité globale du projecteur.

Enfin un inconvénient des projecteurs à lampe déplaçable réside en ce que la précision du positionnement de la lampe par rapport au réflecteur, dans une position ou dans l'autre, se dégrade dans le temps, de façon essentiellement proportionnelle au nombre de manoeuvres, par le fait des usures. De telles usures s'avèrent difficiles à compenser sur des pièces qui sont nécessairement de petites dimensions. Et le recours à un guidage et à un positionnement de précision accroît sensiblement le coût de revient du projecteur.

Le document CH-176 477-A décrit un projecteur dans lequel un réflecteur est monté pivotant par rapport à la lampe, autour d'un axe horizontal passant par le foyer du réflecteur et le filament de la lampe.

La présente invention vise à pallier ces inconvénients de l'état de la technique.

Elle propose à cet effet un projecteur de véhicule automobile, comprenant une source lumineuse et un miroir déplaçables l'un par rapport à l'autre pour engendrer deux faisceaux lumineux de types différents, la source lumineuse étant montée fixe sur une partie du projecteur par rapport à laquelle le miroir peut être déplacé pour occuper sélectivement l'une parmi deux positions discrètes, le déplacement du miroir par rapport à la source consistant en un basculement autour d'un axe, dans lequel l'axe est éloigné de la source.

Des aspects préférés, mais non limitatifs, du projecteur selon l'invention sont les suivants :
- l'axe de basculement est éloigné de la source en direction verticale ;
- l'axe de basculement est situé au-dessus de la source ;
- l'axe de basculement est oblique ;
- l'angle de l'axe de basculement par rapport à l'horizontale est compris entre 10 et 40° ;
- la distance verticale entre l'axe de basculement et la source est choisie de telle manière qu'un relèvement de l'axe du miroir d'environ 1,5 à 2% provoque un décalage de la source par rapport au miroir en direction axiale de l'ordre de 2 mm ;
- le miroir est monté basculant sur une platine sur laquelle est fixé un moyen de déplacement du miroir entre une position non-basculée pour engendrer un premier faisceau et une position basculée vers le haut pour engendrer un second faisceau ;
- le premier faisceau est un faisceau de croisement et le second faisceau est un faisceau de route ;
- il est prévu entre un boîtier du projecteur et la platine un moyen de correction en site des faisceaux émis ;
- le premier faisceau est un faisceau de croisement et le second faisceau est un faisceau de route, le miroir comprend une première zone et une seconde zone, dans la première position du miroir, la première zone est apte à engendrer une partie du faisceau de croisement délimitée par une coupure nette et la seconde zone est apte à engendrer une partie du premier faisceau située au-dessous de cette coupure, et dans la seconde position du miroir, la première zone est apte à engendrer une partie diffuse du faisceau de route et la seconde zone est apte à engendrer une partie de concentration, dans l'axe de la route, du faisceau de route ; et
- les première et seconde zones sont délimitées par deux demi-plans passant au voisinage de l'axe du miroir, et la seconde zone possède une étendue angulaire limitée située latéralement par rapport à la source.

D'autres aspects, buts et avantages de la présente invention apparaîtront mieux à la lecture de la description détaillée suivante de formes de réalisation préférées, donnée à titre d'exemple et faite en référence aux dessins annexés, sur lesquels :
- la figure 1 est une vue schématique en coupe verticale axiale d'un projecteur ;
- la figure 2 est une vue schématique de dos d'un projecteur selon une deuxième forme de réalisation ;
- la figure 3 est une vue schématique de côté du projecteur de la figure 2 ;
- les figures 4a et 4b illustrent, chacune par un ensemble de courbes isocandela, la photométrie de deux faisceaux lumineux obtenus avec le projecteur de la figure 1 ;
- la figure 5 est une vue schématique de dessus d'une forme de réalisation concrète d'un projecteur du type de la figure 1 ;
- la figure 6 est une vue schématique de côté du projecteur de la figure 5 ; et
- la figure 7 est une vue de face d'un miroir pouvant être utilisé dans un projecteur selon l'invention.

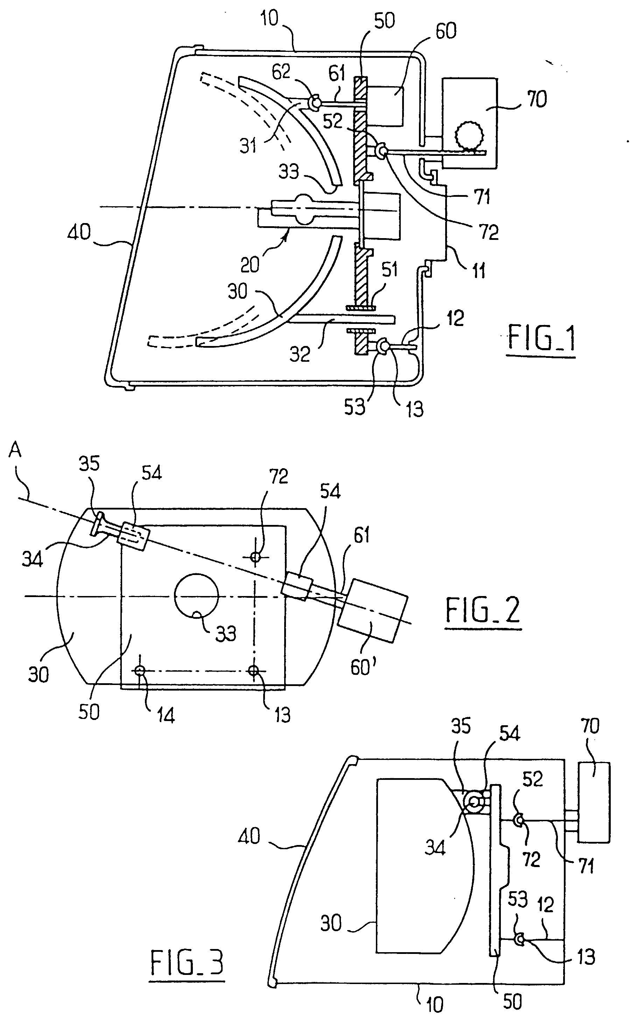

En référence aux dessins, et tout d'abord à la figure 1, on a représenté un projecteur de véhicule automobile qui, de façon classique, possède un boîtier 10 fermé à l'avant par une glace 40 et abritant une lampe 20 et un réflecteur ou miroir 30 pourvu d'un trou 33 pour la lampe 20. Le boîtier 10 possède en outre, à l'arrière, une ouverture d'accès à la lampe 20, fermée par un capuchon 11.

Dans l'espace intérieur du boîtier 10 est prévue une platine 50 de support de la lampe et du miroir, sous forme d'une plaque généralement verticale et perpendiculaire à la direction générale x-x d'émission de la lumière.

Cette platine 50 s'appuie sur la région arrière du boîtier en trois points disposés aux trois sommets d'un triangle rectangle, dont deux sont visibles sur la figure 1.

Un premier de ces points est un point fixe défini par une tête sphérique 13 formée à l'extrémité libre d'une tige 12 fixée au boîtier dans sa région inférieure.

Un second de ces points et un point mobile en translation horizontale, défini par une tête sphérique 72 formée à l'extrémité d'une tige de commande 71 débouchant d'un module de correction en site 70, connu en soi, fixé sur la paroi arrière du boîtier.

Un troisième point, non représenté, se trouve à la hauteur du premier point, et peut être constitué par une tête sphérique réglable manuellement de façon à assurer un réglage en azimut de l'orientation des faisceaux.

La platine 50 est montée sur les têtes 13, 72 par des sièges, respectivement 53, 52, dans lesquels ces têtes sont encliquetées, de façon classique, et est montée de la même manière sur la troisième tête.

La lampe 20, qui est constituée en l'espèce par une lampe à décharge comportant un bulbe 21 et une embase 22, est montée sur la platine 50.

Le miroir 30 est également monté sur la platine 50, de façon mobile en translation. Plus précisément, un actuateur électrique 60 à deux positions stables est fixé sur le dos de la platine 50, dans sa partie supérieure, et possède une tige de sortie translatable 61 dirigée vers le dos du miroir 30 et dont l'extrémité libre porte une tête sphérique 62 engagée par encliquetage dans un siège 63 solidaire du miroir. Dans la région inférieure de la platine est formé dispositif de guidage du miroir en translation, constitué par un guide traversant 51 formé dans la platine et à travers lequel peut coulisser horizontalement une tige lisse 31 solidaire du miroir.

Au moins un autre dispositif de guidage analogue est prévu en un autre endroit du miroir, de façon non illustrée.

De cette manière, l'actuateur 60 est capable de sélectivement amener le miroir 30 dans une position reculée, illustrée en traits pleins, ou dans une position avancée, illustrée en traits tiretés et dont le décalage horizontal par rapport à la position reculée a été exagéré par souci de clarté.

Dans la position reculée, la source lumineuse, en l'espèce l'arc de la lampe à décharge 20, est positionnée par rapport au miroir 30 de façon à engendrer un faisceau lumineux dont la répartition lumineuse et le contour correspondent à un faisceau de croisement européen normalisé.

La Demanderesse a déjà décrit dans de nombreuses publications de brevets antérieures des miroirs capables d'atteindre cet objectif sans avoir à associer à la source une coupelle d'occultation.

Dans cette position, le dispositif 70 de réglage en site se trouve dans une position telle que la coupure de ce faisceau se trouve à la hauteur imposée par la règlementation.

Le passage de ce faisceau de croisement en un faisceau différent, et typiquement un faisceau de route, est assuré:
- d'une part en effectuant une translation du miroir 30 par rapport à la platine 50, pour amener le miroir dans sa position avancée,
- d'autre part en commandant le dispositif de réglage 70 de manière à effectuer un léger relèvement de la lumière émise, ceci étant obtenu en déplacement légèrement vers l'arrière le point d'appui 72 pour faire basculer la platine 50, et donc le miroir 30, dans le sens des aiguilles d'une montre sur la figure 1.

La translation indiquée ci-dessus permet d'engendrer une défocalisation de la source lumineuse par rapport au miroir, ce qui a pour effet principal d'atténuer très sensiblement la coupure nette obtenue dans la position reculée du miroir, et d'assurer une distribution homogène de la lumière dans une bande horizontale étendue mais relativement peu épaisse. Le basculement du miroir permet quant à lui de relever l'ensemble de la lumière ainsi répartie, pour que le faisceau soit émis à la hauteur convenable par rapport à la route.

Typiquement, un faisceau de route de photométrie satisfaisante est obtenu en déplaçant le miroir vers l'avant sur une distance de l'ordre de 2 mm.

Quant à l'importance du basculement vers le haut effectué par le dispositif de réglage en site 70, elle est de préférence de l'ordre de 1 à 2 %.

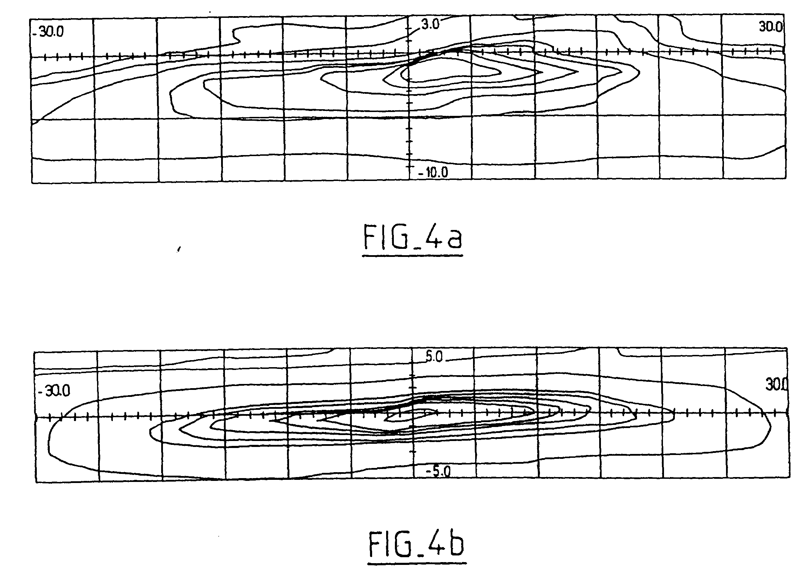

Les figures 4a et 4b représentent, par des ensembles de courbes isocandela sur un écran de projection gradué en poucents, l'allure du faisceau de croisement et du faisceau de route, respectivement.

On observe que tant le faisceau de croisement,- en fonction duquel le miroir 30 est spéficiquement conçu, que le faisceau de route, présentent des photométries tout à fait satisfaisantes.

On observera ici que, dans cette forme de réalisation, le dispositif de réglage en site 70 possède d'une part la fonction consistant à effectuer un basculement prédéterminé de la platine 50 pour le passage d'un faisceau à l'autre, et d'autre part la fonction de réglage du faisceau en site, de façon statique et/ou dynamique, en fonction des variations d'assiette du véhicule, avec une superposition appropriée des signaux de commande. Le dispositif 70 peut toutefois, en variante, ne remplir que la première de ces fonctions.

Les figures 2 et 3 illustrent une forme de réalisation de l'invention.

Sur ces figures, des éléments ou parties identiques ou similaires à ceux de la figure 1 sont désignés dans la mesure du possible par les mêmes signes de référence, et ne seront pas décrits à nouveau.

Dans cette réalisation, on réalise le passage de faisceau de croisement en faisceau de route, et réciproquement, à l'aide d'un actuateur unique 60'. Pour y aboutir, le miroir 30 est monté de façon pivotante sur la platine 50, autour d'un axe A orienté de préférence en oblique et disposé dans la partie supérieure du miroir.

De façon schématique, cet axe est matérialisé par deux paliers 54 solidaires de la platine 50, dont l'un est traversé par un arbre de pivotement 34 en saillie à partir d'un prolongement arrière 35 du miroir 30.

L'actuateur 60' est placé sur l'axe A, en étant monté de façon fixe sur un prolongement (non représenté) de la platine 50, et possède un arbre de sortie rotatif 61 qui commande directement, par des moyens de transmission non illustrés, le basculement du miroir 30.

L'orientation oblique de l'axe de basculement A permet, lors du passage d'une position reculée à une position avancée (c'est-à-dire un léger basculement dans le sens des aiguilles d'une montre sur la figure 3), de mettre en jeu trois phénomènes :
- tout d'abord, l'axe A se trouvant à distance de la source lumineuse, il se produit une défocalisation de la source par rapport au miroir, et donc une répartition plus homogène de la lumière ainsi que la disparition de la coupure nette correspondant au faisceau de croisement engendré dans la position reculée;
- ensuite, le basculement du miroir 30 a pour effet de relever son axe horizontal, et donc de relever l'ensemble de la lumière émise, ce qui correspond à l'ajustement en site effectué par le dispositif 70 dans le cas de la figure 1;
- enfin, le basculement s'effectuant autour d'une ligne oblique, il provoque également un décalage latéral de l'axe du miroir, ce qui a pour effet de recentrer le faisceau, dont la tache de concentration est classiquement décalée vers le bas côté dans le cas d'un faisceau de croisement, vers l'axe de la route.

Typiquement, on détermine la distance verticale entre l'axe A et l'axe du miroir de telle manière qu'un basculement d'environ 1,5 à 2% du miroir provoque un décalage axial de la source lumineuse d'environ 2 mm. On obtient ainsi par ce seul mouvement une défocalisation de valeur appropriée, de même qu'un relèvement de la lumière d'un angle approprié.

En outre, pour atteindre le degré de remontée verticale de la lumière et le degré de recentrage souhaités, l'angle entre l'axe A et le plan horizontal est avantageusement compris entre 10 et 40°.

Dans l'exemple illustré sur la vue de dos de la figure 2, l'axe du miroir va être décalé vers la droite, ce qui convient dans le cas d'un sens de circulation à gauche.

Ainsi un actuateur unique permet de passer, avec une lampe fixe, d'une position de miroir correspondant à un faisceau de croisement à une position de miroir correspondant à un faisceau de route, et ceci sans qu'aucune autre disposition ne soit nécessaire.

Par ailleurs, la platine 50 reste montée sur trois points d'appui 13, 14 et 72, de manière à effectuer d'une part, par le dispositif 70, une correction dynamique ou statique en site, et d'autre part, par réglage manuel au niveau du point 14, un réglage initial en azimut.

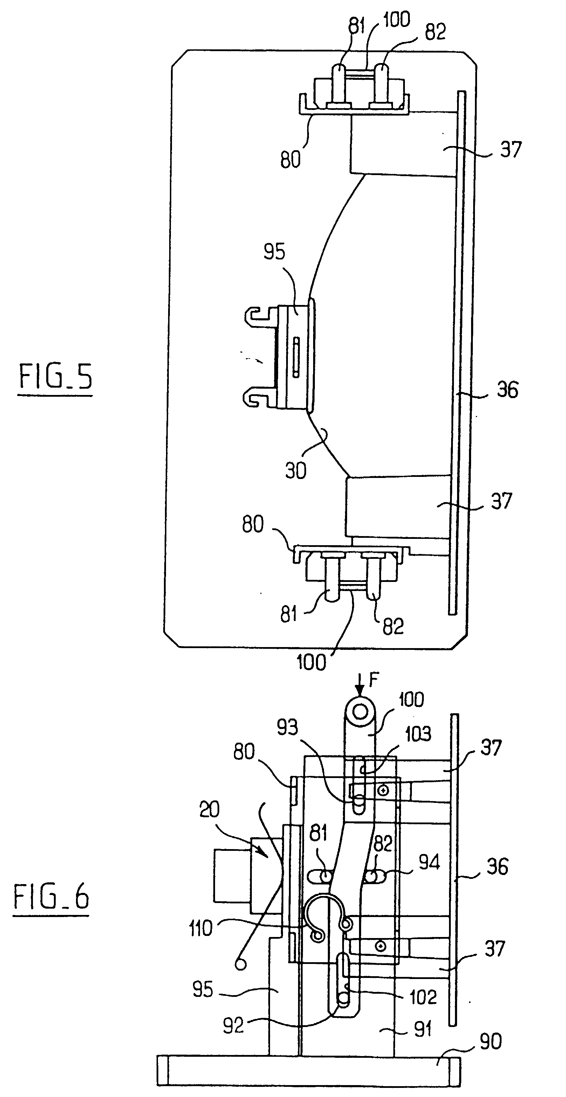

Les figures 5 et 6 illustrent schématiquement un mécanisme permettant d'effectuer la translation du miroir 30 telle qu'elle a été décrite en référence à la figure 1.

La platine comporte dans ce cas une embase horizontale 90 comportant deux montants latéraux 91 à partir desquels font saillie deux doigts de guidage 92, 93 décalés en hauteur.

Sur ces doigts est montée une barre de commande 100 comportant deux fentes oblongues 102, 103 recevant respectivement les doigts 92, 93 en coulissement vertical.

Chaque barre 100, généralement verticale, possède une partie intermédiaire légèrement oblique qui est emprisonnée entre deux doigts 81, 82 qui sont montées sur une ossature 80 libre par rapport à l'embase 100.

Ces deux doigts 81, 82 sont reçus à coulissement horizontal dans une ouverture oblongue 94 prévue dans le montant respectif 91 entre les doigts 92, 93, de telle sorte que le déplacement vertical de chaque barre 100, sous l'action d'une force F exercée par un actuateur commun (non représenté), provoque la translation horizontale des paires de doigts 81, 82. En l'espèce, l'abaissement des barres 100 provoque une translation vers la droite sur les figures 5 et 6.

Le miroir 30 est monté sur les éléments d'ossature 80 par l'intermédiaire d'une collerette frontale 36 du miroir, possédant des aménagements 37 en saillie vers l'arrière (vers la gauche sur la figure 5) sur lesquels sont fixés les éléments d'ossature 80.

La lampe 20 est fixée sur un montant 95 s'étendant vers le haut à partir de l'embase 90, au niveau du fond du miroir.

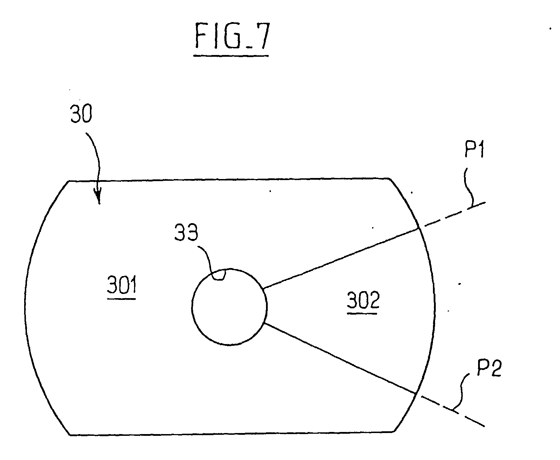

On va maintenant décrire en référence à la figure 7 une forme de réalisation préférée d'un miroir 30 utilisé dans un projecteur selon l'invention.

On a indiqué plus haut que le miroir était conçu pour que sa partie qui détermine la coupure du faisceau de croisement soit défocalisée par rapport à la source lumineuse lorsque le miroir est amené en position de route, de manière à faire disparaître cette coupure.

Dans le même temps, il est particulièrement avantageux qu'une zone particulière du miroir soit généralement défocalisée par rapport à la source dans la position croisement, et soit au contraire refocalisée dans la position route. Ceci permet, à l'aide de cette zone particulière, de donner au faisceau de route la tache de concentration centrale nécessaire pour un bon confort visuel.

Ainsi le miroir 30 illustré sur la figure 7 comprend une zone 301 et une zone 302, la zone 302 s'étendant, en vue de face, à droite de la lampe et étant délimitée en l'espèce par deux demi-plans P1 et P2 passant de préférence par l'axe du miroir.

Cette zone 302 s'étend par exemple sur 50 à 90°, tandis que la zone 301 s'étend par exemple sur 270 à 310°.

La zone 301 est apte, dans la position de croisement, à coopérer avec la source pour engendrer un faisceau délimité par une coupure nette, en l'espèce une coupure européenne normalisée. Dans cette même position, la zone 302 engendre un éclairement relativement concentré, décalé légèrement vers la droite par rapport à l'axe de la route.

Au contraire, dans la position de route, la zone 301 est défocalisée pour diffuser la lumière émise, et en particulier pour faire disparaître la coupure, tandis que la zone 302 se trouve refocalisée, c'est-à-dire que le ou les foyers de cette zone 302 sont rapprochés de la source, de manière à émettre une lumière plus concentrée, la nouvelle orientation du miroir dans cette position étant telle que cette lumière concentrée est émise dans l'axe de la route.

L'homme du métier saura réaliser ces surfaces sans difficulté à partir des enseignements des différents brevets sur le sujet publiés au nom de la Demanderesse.

Il est à noter que la position et la taille de la zone 302 peut largement varier en fonction du type de lampe utilisé. Ainsi, notamment avec une lampe à décharge équipée conventionnellement de bandes opaques destinées à faciliter la formation de la coupure normalisée, l'inclinaison du plan limite P2 n'est pas nécessairement corrélée à l'inclinaison d'une partie de coupure inclinée.

Bien entendu, l'invention n'est nullement limitée aux formes de réalisation décrites ci-dessus et représentées sur les dessins, mais l'homme du métier saura y apporter toute variante ou modification conforme à son esprit.

En particulier, l'invention permet de réaliser non seulement des projecteurs code/route, mais également d'autres types de projecteurs, et notamment antibrouillard/complémentaire, etc.

Lorsque le mouvement du miroir par rapport à la source est un pivotement, on pourra prévoir que l'axe est oblique sans qu'il soit éloigné de la source.

## Revendications

1. Projecteur de véhicule automobile, comprenant une source lumineuse (20) et un miroir (30) déplaçables l'un par rapport à l'autre pour engendrer deux faisceaux lumineux de types différents, la source lumineuse étant montée fixe sur une partie (50) du projecteur par rapport à laquelle le miroir (30) peut être déplacé pour occuper sélectivement l'une parmi deux positions discrètes, le déplacement du miroir (30) par rapport à la source consistant en un basculement autour d'un axe (A), caractérisé en ce que l'axe est éloigné de la source (20).

2. Projecteur selon la revendication 1, caractérisé en ce que l'axe est éloigné de la source (20) en direction verticale.

3. Projecteur selon la revendication 1 ou 2, caractérisé en ce que l'axe de basculement (A) est situé au-dessus de la source (20).

4. Projecteur selon l'une des revendications 2 à 3, caractérisé en ce que la distance verticale entre l'axe de basculement (A) et la source (20) est choisie de telle manière qu'un relèvement de l'axe du miroir (30) d'environ 1,5 à 2% provoque un décalage de la source par rapport au miroir en direction axiale de l'ordre de 2 mm.

5. Projecteur selon l'une des revendications 1 à 4, caractérisé en ce que l'axe de basculement (A) est oblique.

6. Projecteur selon la revendication 5, caractérisé en ce que l'angle de l'axe de basculement (A) par rapport à l'horizontale est compris entre 10 et 40°.

7. Projecteur selon l'une des revendications 1 à 6, caractérisé en ce que le miroir (30) est monté basculant sur une platine (50) sur laquelle est fixé un moyen (60') de déplacement du miroir entre une position non-basculée pour engendrer un premier faisceau et une position basculée vers le haut pour engendrer un second faisceau.

8. Projecteur selon la revendication 7, caractérisé en ce que le premier faisceau est un faisceau de croisement et le second faisceau est un faisceau de route.

9. Projecteur selon l'une des revendications 7 et 8, caractérisé en ce qu'il est prévu entre un boîtier (10) du projecteur et la platine (50) un moyen de correction en site (70) des faisceaux émis.

10. Projecteur selon l'une des revendications 1 à 9, caractérisé en ce que le premier faisceau est un faisceau de croisement et le second faisceau est un faisceau de route, en ce que le miroir comprend une première zone (301) et une seconde zone (302), en ce que, dans une première position du miroir, la première zone (301) est apte à engendrer une partie du faisceau de croisement délimitée par une coupure nette et la seconde zone (302) est apte à engendrer une partie du premier faisceau située au-dessous de cette coupure, et en ce que, dans une seconde position du miroir, la première zone (301) est apte à engendrer une partie diffuse du faisceau de route et la seconde zone (302) est apte à engendrer une partie de concentration, dans l'axe de la route, du faisceau de route.

11. Projecteur selon la revendication 10, caractérisé en ce que les première et seconde zones (301, 302) sont délimitées par deux demi-plans (P1, P2) passant au voisinage de l'axe du miroir, et en ce que la seconde zone possède une étendue angulaire limitée située latéralement par rapport à la source.
